# EUROPEAN PATENT SPECIFICATION

(11) **EP 4 179 240 B1**
(45) Date of publication and mention of the grant of the patent: **24.07.2024**
(21) Application number: 21748662.0
(22) Date of filing: 06.07.2021
(51) Int. Cl.: F16K 31/06, H01M 8/04089, H01M 8/04082

(54) **ANODE VALVE FOR A FUEL CELL SYSTEM FOR AUTOMOTIVE**
ANODENVENTIL FÜR EIN BRENNSTOFFZELLENSYSTEM FÜR AUTOMOBIL
VANNE ANODE POUR SYSTÈME DE PILE À COMBUSTIBLE POUR AUTOMOBILE

(30) Priority: 09.07.2020 IT 202000016633
(43) Date of publication of application: 17.05.2023
(73) Proprietor: OMB Saleri S.p.A. - Societa' Benefit, 25126 Brescia (IT)
(72) Inventor: BOSIO, Marco, 25126 Brescia (IT); PERONI, Davide, 25126 Brescia (IT); SANTULLI, Renato, 25126 Brescia (IT)
(74) Representative: Pulieri, Gianluca Antonio
(86) International application number: PCT/IB2021/056035
(87) International publication number: WO 2022/009084

(56) References cited:
- CN-A- 109 630 739
- JP-A- 2020 060 245
- US-A1- 2010 071 781
- US-A1- 2016 076 493
- US-B2- 10 030 785

## Description

The present invention is in the field of components for hydrogen fuel cell systems for automotive transport; in particular, the present invention refers to an anode valve, i.e., a valve that intercepts the low-pressure branch of the system that feeds hydrogen to the fuel cells.

In a fuel cell system for automotive transport, hydrogen is forced at high pressure into a tank and fed through a high-pressure line to a pressure regulator, downstream of which a low-pressure line starts that feeds the fuel cells. As products of the chemical reactions that lead to the production of electricity, which is used to drive an electric motor, fuel cells discharge a mixture consisting of hydrogen, nitrogen, water vapor, and liquid water. The mixture is treated with an Anode Water Separator (AWS), which separates the hydrogen, which is intended to be recirculated, from the other components. The mixture formed by nitrogen, water vapor, and liquid water is directed to one or more anode valves, which assume different names according to the mixture treated. Usually, a valve that treats a mixture with a prevalent liquid component is called an Anode Drain Valve

(ADV); a valve that treats a mixture with a prevalent gaseous component is called an Anode Purge Valve (APV); a valve that treats a mixture with a prevalent gaseous component, placed upstream the ADV valve, is called an Anode Drain Valve Header (ADVH). Such a valve may be an electromagnetic valve as disclosed in JP 2020 060245 A.

Anode valves need to ensure high reliability, which is severely tested by the required service life and the time spent in contact with the gas and liquid mixture being treated.

The object of the present invention is to provide an anode valve with high reliability.

Said object is achieved by an anode valve according to claim 1. The claims dependent thereon identify additional advantageous embodiments of the invention.

The features and advantages of the anode valve according to the present invention will become apparent from the following description, given by way of nonlimiting example in accordance with the figures in the accompanying drawings, wherein:

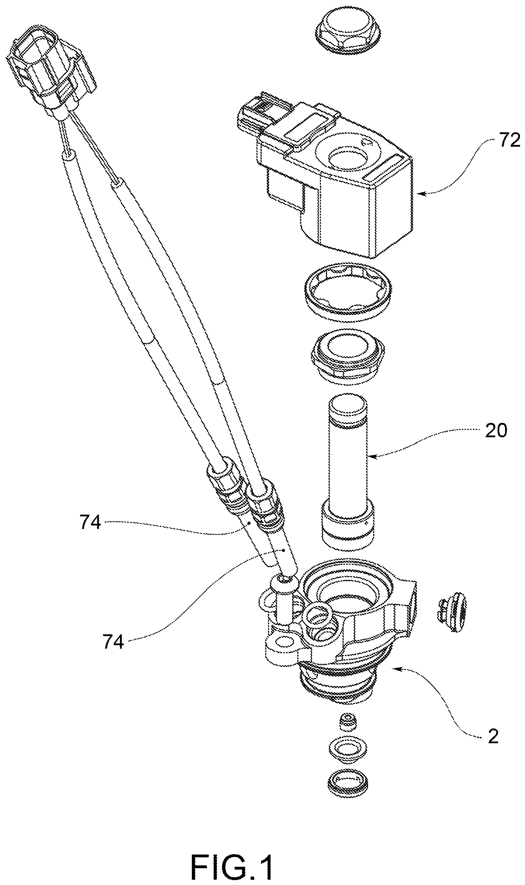

- Fig. 1 depicts an anode valve according to an embodiment of the present invention, in separate parts;

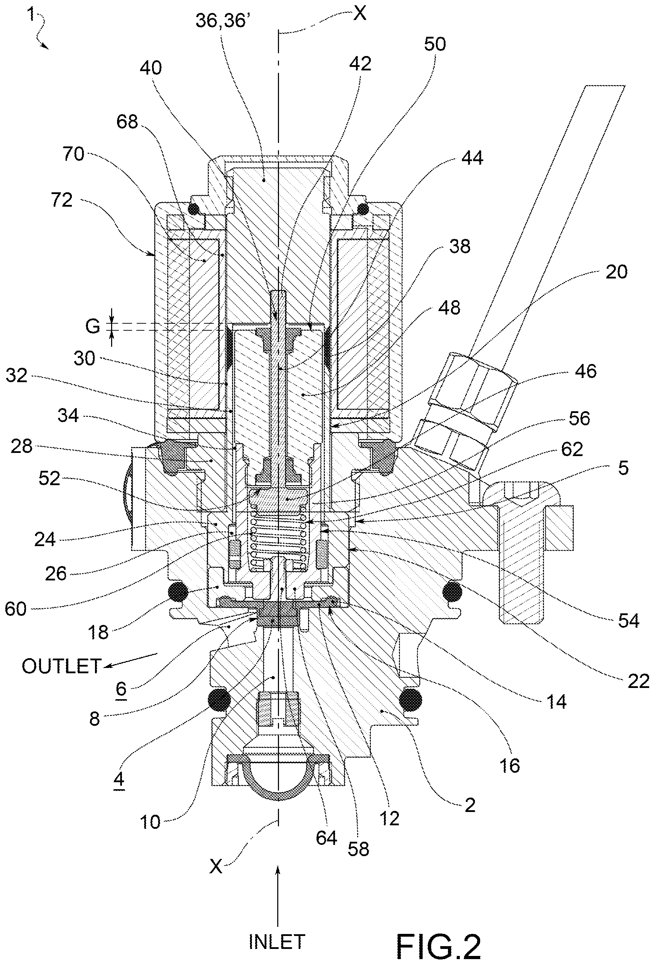

- Fig. 2 depicts a cross section of the anode valve from Fig. 1.

With reference to the figure in the attached drawing, the reference 1 has been used to indicate an anode valve operating along a line downstream of fuel cells, supplied with a fluid which, depending on the uses of the valve, is primarily composed of gaseous components, such as hydrogen, nitrogen, and water vapor, or water.

The anode valve 1 comprises a valve body 2, which is usually made in a single piece from aluminum, for example obtained from a bar by tooling. The valve body 2 has an inlet pipe 4 for the inlet of the fluid into the anode valve 1 and an outlet pipe 6 for discharging the fluid, which is connectable to the inlet pipe 4.

The valve body 2 also has a compartment 5 for containing some components; said compartment 5 has on its bottom, at the passage between the inlet pipe 4 and the outlet pipe 6, a support surface 16, which will be described hereinafter.

An at least partially elastically deformable shutter 8 is operational between the inlet pipe 4 and the outlet pipe 6; in a closed configuration, the shutter 8 sealingly closes the passage of the fluid from the inlet pipe 4 to the outlet pipe 6, while in an open configuration, the shutter 8 at least partially clears the passage and the fluid may transit from the inlet pipe 4 to the outlet pipe 6.

The shutter 8 comprises a shutter body 10, which has at least one contact surface with a sealing surface of the valve body 2 for closing the passage between the inlet pipe 4 and the outlet pipe 6, and an elastically deformable shutter diaphragm 12 joined to the shutter body 10. The shutter body and shutter diaphragm are preferably made in one piece, for example of synthetic rubber, such as EPDM (Ethylene-Propylene Diene Monomer).

For example, the shutter body 10 is cylindrical in shape and the shutter diaphragm 12 extends in a ring radially from the shutter body 10.

Preferably, the shutter diaphragm 12 has peripherally an annular enlargement 14 to improve its sealing characteristics.

The shutter diaphragm 12 rests on the support surface 16.

The anode valve 1 further comprises a pressure element 18, for example annular, usually made of a metal material, housed in the body compartment 5 of the valve body 2 and suitable for pressing on the shutter diaphragm 12 so as to achieve a fluid seal between the pressure element 18 and the shutter diaphragm 12 and between the shutter diaphragm 12 and the support surface 16 of the valve body 2.

Consequently, the body compartment 5 is hermetically sealed off from the inlet pipe 4 and the outlet pipe 6.

The anode valve 1 further comprises an inner casing 20, for example tubular, housed at least partially in the body compartment 5.

In particular, the inner casing 20 comprises a first portion 22, housed in the body compartment 5, in contact with the pressure element 18, comprising a first tubular wall 24 surrounding a first chamber 26.

On the first portion 22, externally, a nut 28 operates, which, screwed to the valve body 2 at the mouth of the body compartment 5, operates with thrust on the first portion 22, whereby the thrust action is transmitted to the pressure element 18.

The inner casing 20 further comprises a second portion 30, which extends axially from the first portion 22 to exit the body compartment 5 through the nut 28; the second portion 30 comprises a second tubular wall 32 surrounding a second chamber 34. The second wall 32, terminating in a wall end 32a, is made of a ferromagnetic metal material, for example carbon steel, such as 11SMn37.

Lastly, the inner casing 20 comprises a third portion 36 joined to the second portion 30 outside of the body compartment 5, which closes the second chamber 34. According to an embodiment, said third portion 36 further comprises a fixed core 36' of a solenoid suitable for moving the shutter body 10 of the shutter 8 by electromagnetic actuation.

The third portion 36 is made of a ferromagnetic metal material, for example carbon steel, such as 11SMn37.

The inner shell 20 further comprises an annular band 38, made of a non-magnetic material, for example a copper alloy such as CuAl8 or generically of bronze, applied to the wall end 32a, interrupting the magnetic continuity with the third portion 36 or fixed core 36'. For example, the band 38 comprises the remaining portion of a weld made between the second wall 32 and the third portion 36 or fixed core 36'.

The anode valve 1 further comprises a fixed guide 40 housed in the second chamber 34; the guide 40 comprises a foot 42 fixed to the third portion 36, a stem 44 extending along a major axis X from the foot 42, and a head 46 joined to the end of the stem 44 opposite the foot 42.

The anode valve 1 further comprises a movable core 48 of the solenoid device, made of a ferromagnetic metal material, housed in the second chamber 34 and slidably mounted on the stem 44 of the guide 40. The movable core 48 extends along the main axis X between a first end 50, facing the third portion 36 (fixed core), and an opposite end 52, facing the head 46, which forms an abutment.

The anode valve 1 further comprises a bushing 54 integral with the movable core 48, for example applied to said movable core 48 at the second end 52; the bushing 54 comprises an annular bushing wall 56 and a bushing base 58 which delimit, together with the movable core 48, a bushing compartment 60, in the head 46 of which the guide 40 is located.

The anode valve 1 further comprises elastic return means suitable for operating permanently on the bushing 54 to bring it toward the closed configuration. For example, said return means comprise a spring 62 housed in the bushing compartment 60, in compression between the guide 40, and in particular applied to the head 46, and the bushing base 58.

The bushing 54 is connected to the shutter 8, whereby translation of the bushing 54 results in a displacement of the shutter body 10 between the closed configuration and the open configuration.

For example, the shutter 8 comprises a peg 64 integral with the shutter body 10, e.g., made by co-molding or co-injection with the shutter body 10; the peg 64, extending along said main axis X, is engaged, e.g., screwed, to the bushing base 58.

Preferably, the solenoid device further comprises a fixed frame 68 supporting the coil 70, which is electrically powered to generate a magnetic field; the coil at least partially accommodates the fixed core 36' and at least partially accommodates the movable core 48.

The band 38 made of non-magnetic metal material is arranged between the coil 70 and the second chamber 34 to deviate the magnetic field and convey it into the movable core 48.

Lastly, the solenoid device preferably comprises an outer casing 72, which encloses the frame 68 with the coil 70 and the fixed core 36'.

According to one embodiment, moreover, the anode valve 1 comprises at least one heater 74, which is electrically powered, to heat the valve body 2 and melt any ice deposits formed at low temperatures.

In the normal operation of the anode valve 1, said anode valve is initially in the closed configuration wherein the solenoid device is in a deactivated state in which the coil 70 is not electrically powered; consequently, there are no magnetic actions of attraction between the fixed core 36' and the movable core 48, and the action of the return means, particularly the spring 62, causes the shutter body to obstruct the passage of fluid from the inlet pipe 4 to the outlet pipe 6. In said configuration, the movable core 48 is in a closed position wherein the first end 50 forms a gap G with the fixed core 36'.

When the anode valve 1 is in the closed configuration, the fluid accumulates in the inlet pipe 4 and exerts a pressure on the shutter that tends to lift it, bringing it into the open configuration. The action of the return means must therefore be particularly energetic in order to keep the shutter in the closed configuration.

When the system requires the fluid to be discharged, the coil 70 is electrically powered so that the solenoid device goes into an activated state. The action of attraction between the movable and fixed cores generated by the magnetic field attracts the movable core 48 toward the fixed core 36'; the movable core 48 then moves to an open position wherein the gap G is reduced to the minimum. Accordingly, the shutter body 10 clears the passage between the inlet pipe 4 and the outlet pipe 6. The valve 1 thus assumes the open configuration and the fluid may be discharged downstream.

Since the action of the spring 62, as discussed above, must be very energetic to ensure closure in the closed configuration, the action of attraction between the movable and fixed cores must be equally energetic to pass into the open configuration. To this end, the band 38 allows the magnetic flux from the coil to the movable core to be properly channeled, preventing it from being channeled into the inner casing and thereby increasing the attractive action between the fixed core and the movable core.

Advantageously, the shutter provided with a diaphragm allows the body compartment 5 to be isolated from the inlet pipe 4, whereby hydrogen or other components of the pressurized fluid in the inlet pipe may not travel up the inner casing to the band 38, the material of which is particularly prone to deterioration when in contact with such gases. In effect, by virtue of the shutter diaphragm, the inlet pipe 4 and the outlet pipe 6 are hermetically separated from the body compartment and from the second chamber which faces the band 38 made of non-magnetic material.

Innovatively, therefore, the anode valve according to the present invention enables the aforementioned reliability requirements to be met.

It is understood that a person skilled in the art, in order to meet contingent needs, may make modifications to the anode valve described above, all of which are contained within the scope of protection as defined by the following claims.

## Claims

1. An anode valve (1) for a circuit downstream of fuel cells of a system for automotive transport, comprising:
- a valve body (2) having an inlet pipe (4) for the inlet of a fluid, an outlet pipe (6) for discharging the fluid, connectable to the inlet pipe (4), and a body compartment (5) ;
- a shutter (8) suitable for passing from a closed configuration to an open configuration, wherein the shutter (8) comprises a shutter body (10) and an elastically deformable shutter diaphragm (12), joined to the shutter body (10);
- an electrically powered solenoid device for moving the shutter body (10) from the closed configuration to the open configuration, comprising a fixed core (36'), a translatable movable core (48), integral with the shutter body (10), and a coil (70);
- an inner casing (20) provided with a second chamber (34) in which is arranged the movable core (48);
wherein the inner casing (20) comprises an annular band (38) made of a non-magnetic metal material, arranged between the coil (70) and the second chamber (34) to deviate the magnetic field and convey it into the movable core (48), and
wherein the shutter diaphragm (12) is permanently pressed against a support surface (16) of the valve body (2) to form a seal for the fluid and hermetically separate the inlet pipe (4) and the outlet pipe (6) from the body compartment (5) and from the second chamber (34), **characterized in that** a fixed guide (40) is received in the second chamber (34), the fixed guide (40) comprising a foot (42), fastened to the fixed core (36'), a stem (44) extending along a main axis (X) starting from the foot (42), and a head (46), joined to the end of the stem (44) opposite to the foot (42), wherein said movable core (48) is slidable on the stem (44).

2. Anode valve (1) according to claim 1, wherein the body compartment (5) has a support surface (16), on which said shutter diaphragm (12) rests and the anode valve (1) comprises a pressure element (18), accommodated in the body compartment (5), suitable for pressing on the shutter diaphragm (12) to make a fluid-tight seal between the pressure element (18) and the shutter diaphragm (12) and between the shutter diaphragm (12) and the support surface (16).

3. Anode valve (1) according to claim 1 or 2, wherein the inner casing (20) comprises a second tubular wall (32), which surrounds the second chamber (34), made of a ferromagnetic metal material, terminating at a wall end (32a), said band (38) being applied to the wall end (32a) .

4. Anode valve (1) according to claim 3, wherein the fixed core (36') forms a third portion (36) of the inner casing (20), which closes the second chamber (34).

5. Anode valve (1) according to any of the preceding claims, wherein the band (38) is made of a copper alloy, for example bronze.

6. Anode valve (1) according to any of the preceding claims, comprising a bushing (54) and elastic return means suitable for acting permanently on the bushing (54), to bring it toward the closed configuration.

7. Anode valve (1) according to claim 6, wherein the bushing (54) is integral with the movable core (48), and is provided with an annular bushing wall (56) and a bushing base (58), which delimit, together with the movable core (48), a bushing compartment (60).

8. Anode valve (1) according to claim 7, wherein said elastic return means are received in the bushing compartment (60).

9. Anode valve (1) according to claim 7, wherein the shutter (8) comprises a peg (64) integral with the shutter body (10) connected to the bushing base (58).

## Patentansprüche

1. Anodenventil (1) für einen Kreislauf, der den Brennstoffzellen eines Systems für den Kraftfahrzeugverkehr nachgeschaltet ist, aufweisend:
- einen Ventilkörper (2) mit einem Einlassrohr (4) für den Einlass eines Fluids, einem Auslassrohr (6) zum Ausleiten des Fluids, das mit dem Einlassrohr (4) verbindbar ist, und einem Körperraum (5);
- einen Verschluss (8), der geeignet ist, von einer geschlossenen Konfiguration in eine offene Konfiguration überzugehen, wobei der Verschluss (8) einen Verschlusskörper (10) und eine elastisch verformbare Verschlussblende (12) umfasst, die mit dem Verschlusskörper (10) zusammengefügt ist;
- eine elektrisch geregelte Magnetvorrichtung zum Bewegen des Verschlusskörpers (10) von der geschlossenen Konfiguration in die offene Konfiguration, umfassend einen festen Kern (36'), einen verschiebbaren bewegbaren Kern (48), der integral mit dem Verschlusskörper (10) ausgebildet ist, und eine Spule (70);
- ein Innengehäuse (20), das mit einer zweiten Kammer (34) versehen ist, in der der bewegbare Kern (48) angeordnet ist; wobei das Innengehäuse (20) ein ringförmiges Band (38), hergestellt aus einem nichtmagnetischen Metallmaterial, umfasst, das zwischen der Spule (70) und der zweiten Kammer (34) angeordnet ist, um das Magnetfeld abzulenken und es in den bewegbaren Kern (48) zu leiten, und
wobei die Verschlussblende (12) permanent gegen eine Stützfläche (16) des Ventilkörpers (2) gepresst wird, um eine Dichtung für das Fluid zu bilden und das Einlassrohr (4) und das Auslassrohr (6) hermetisch von dem Körperraum (5) und von der zweiten Kammer (34) zu trennen,
**dadurch gekennzeichnet, dass** eine feste Führung (40) in der zweiten Kammer (34) aufgenommen ist, wobei die feste Führung (40) einen Sockel (42) umfasst, der an dem festen Kern (36') befestigt ist, einen Stiel (44) umfasst, der sich entlang einer Hauptachse (X) ausgehend von dem Sockel (42) erstreckt, und einen Kopf (46) umfasst, der mit dem Ende des Stiels (44) gegenüber dem Sockel (42) zusammengeführt ist, wobei der bewegbare Kern (48) auf dem Stiel (44) verschiebbar ist.

2. Anodenventil (1) nach Anspruch 1, wobei der Körperraum (5) eine Stützfläche (16) aufweist, auf der die Verschlussblende (12) aufliegt, und das Anodenventil (1) ein Druckelement (18) umfasst, das in dem Körperraum (5) aufgenommen und geeignet ist, auf die Verschlussblende (12) zu drücken, um eine fluiddichte Dichtung zwischen dem Druckelement (18) und der Verschlussblende (12) und zwischen der Verschlussblende (12) und der Stützfläche (16) herzustellen.

3. Anodenventil (1) nach Anspruch 1 oder 2, wobei das Innengehäuse (20) eine zweite Rohrwand (32) aufweist, die die zweite Kammer (34) umgibt, hergestellt aus einem ferromagnetischen Metallmaterial, die an einem Wandende (32a) endet, wobei das Band (38) an dem Wandende (32a) angebracht ist.

4. Anodenventil (1) nach Anspruch 3, wobei der feste Kern (36') einen dritten Abschnitt (36) des Innengehäuses (20) bildet, der die zweite Kammer (34) schließt.

5. Anodenventil (1) nach einem der vorstehenden Ansprüche, wobei das Band (38) aus einer Kupferlegierung, beispielsweise Bronze, hergestellt ist.

6. Anodenventil (1) nach einem der vorstehenden Ansprüche, aufweisend eine Buchse (54) und elastische Rückstellmittel, die geeignet sind, permanent auf die Buchse (54) einzuwirken, um sie in die geschlossene Konfiguration zu bringen.

7. Anodenventil (1) nach Anspruch 6, wobei die Buchse (54) integral mit dem bewegbaren Kern (48) ausgebildet ist und mit einer ringförmigen Buchsenwand (56) und einer Buchsenbasis (58) versehen ist, die zusammen mit dem bewegbaren Kern (48) einen Buchsenraum (60) begrenzen.

8. Anodenventil (1) nach Anspruch 7, wobei die elastischen Rückstellmittel in dem Buchsenraum (60) aufgenommen sind.

9. Anodenventil (1) nach Anspruch 7, wobei der Verschluss (8) einen Stift (64) aufweist, der integral mit dem Verschlusskörper (10) ausgebildet ist, der mit der Buchsenbasis (58) verbunden ist.

## Revendications

1. Vanne d'anode (1) pour circuit en aval de piles à combustible d'un système pour le transport automobile, comprenant :
- un corps de vanne (2) comportant un tuyau d'entrée (4) pour l'admission d'un fluide, un tuyau de sortie (6) pour l'évacuation du fluide, pouvant être raccordé au tuyau d'entrée (4), et un compartiment de corps (5) ;
- un obturateur (8) adapté pour passer d'une configuration fermée à une configuration ouverte, où l'obturateur (8) comprend un corps d'obturateur (10) et un diaphragme d'obturateur (12) déformable par élasticité, assemblé au corps d'obturateur (10) ;
- un dispositif à solénoïde à alimentation électrique destiné à déplacer le corps d'obturateur (10) de la configuration fermée dans la configuration ouverte, comprenant un noyau fixe (36'), un noyau mobile (48) par translation, d'un seul tenant avec le corps d'obturateur (10), et une bobine (70) ;
- un carter interne (20) doté d'une seconde chambre (34) dans laquelle est agencé le noyau mobile (48) ;
dans laquelle le carter interne (20) comprend une bande (38) annulaire composée d'un matériau métallique amagnétique, agencé entre la bobine (70) et la seconde chambre (34) pour dévier le champ magnétique et transporter celui-ci dans le noyau mobile (48), et
dans laquelle le diaphragme d'obturateur (12) est comprimé en permanence contre une surface de support (16) du corps de vanne (2) pour former un joint d'étanchéité pour le fluide et séparer hermétiquement le tuyau d'entrée (4) et le tuyau de sortie (6) du compartiment de corps (5) et de la seconde chambre (34),
**caractérisée en ce qu'**un guide fixe (40) est reçu dans la seconde chambre (34), le guide fixe (40) comprenant un pied (42), fixé au noyau fixe (36'), une tige (44) s'étendant le long d'un axe principal (X) partant du pied (42), et une tête (46), assemblée à l'extrémité de la tige (44) à l'opposé du pied (42), ledit noyau mobile (48) pouvant coulisser sur la tige (44).

2. Vanne d'anode (1) selon la revendication 1, dans laquelle le compartiment de corps (5) présente une surface d'appui (16), sur laquelle ledit diaphragme d'obturateur (12) repose, et la vanne d'anode (1) comprend un élément de pression (18), logé dans le compartiment de corps (5), approprié pour appuyer sur le diaphragme d'obturateur (12) et réaliser un joint d'étanchéité étanche au fluide entre l'élément de pression (18) et le diaphragme d'obturateur (12) et entre le diaphragme d'obturateur (12) et la surface d'appui (16).

3. Vanne d'anode (1) selon la revendication 1 ou 2, dans laquelle le carter interne (20) comprend une seconde paroi tubulaire (32), qui entoure la seconde chambre (34), composée d'un matériau métallique ferromagnétique, se terminant au niveau d'une extrémité de paroi (32a), ladite bande (38) étant appliquée sur l'extrémité de paroi (32a).

4. Vanne d'anode (1) selon la revendication 3, dans laquelle le noyau fixe (36') forme une troisième partie (36) du carter interne (20), qui ferme la seconde chambre (34).

5. Vanne d'anode (1) selon l'une quelconque des revendications précédentes, dans laquelle la bande (38) se compose d'un alliage de cuivre, par exemple de bronze.

6. Vanne d'anode (1) selon l'une quelconque des revendications précédentes, comprenant un manchon (54) et des moyens de retour élastiques appropriés pour agir de façon permanente sur le manchon (54), pour amener celui-ci en direction de la configuration fermée.

7. Vanne d'anode (1) selon la revendication 6, dans laquelle le manchon (54) est d'un seul tenant avec le noyau mobile (48), et est doté d'une paroi de manchon annulaire (56) et d'une base de manchon (58), qui délimitent, conjointement avec le noyau mobile (48), un compartiment de manchon (60).

8. Vanne d'anode (1) selon la revendication 7, dans laquelle lesdits moyens de retour élastiques sont reçus dans le compartiment de manchon (60).

9. Vanne d'anode (1) selon la revendication 7, dans laquelle l'obturateur (8) comprend une cheville (64) d'un seul tenant avec le corps d'obturateur (10) raccordé à la base de manchon (58).
